# EUROPÄISCHE PATENTSCHRIFT

(11) **EP 0 972 681 B1**
(45) Veröffentlichungstag und Bekanntmachung des Hinweises auf die Patenterteilung: **12.05.2004**
(21) Anmeldenummer: 99110471.2
(22) Anmeldetag: 31.05.1999
(51) Int. Cl.: B60R 7/04

(54) **Ordnungssystem zur Aufnahme von Gegenständen**
Arrangement system for receiving articles
Système de rangement pour recevoir des articles

(30) Priorität: 17.07.1998 DE 19832102
(43) Veröffentlichungstag der Anmeldung: 19.01.2000
(73) Patentinhaber: Herbert Richter Metallwaren-Apparatebau GmbH & Co., 75180 Pforzheim (DE)
(72) Erfinder: Richter, Herbert, 75331 Engelsbrand (DE)
(74) Vertreter: Dimmerling, Heinz, Dipl.-Ing.

(56) Entgegenhaltungen:
- WO-A-90/09130
- DE-A- 3 628 602
- DE-U- 9 215 542
- US-A- 1 696 128
- US-A- 3 674 299

## Beschreibung

Die Erfindung betrifft ein Ordnungssystem zur Aufnahme von Gegenständen, insbesondere zur Verwendung in einem Kraftfahrzeug, nach dem Oberbegriff des Anspruchs 1, mit wenigstens einer Lasche, welche an ihrem einen Ende eine Ausnehmung aufweist und an ihrem anderen Ende wenigstens ein hakenförmiges Element aufweist.

Im Stand der Technik sind Bauteile bekannt, bei denen eine Lasche aus einem biegsamen Kunststoff besteht und eine an einem Ende der Lasche angeordneten Ausnehmung so ausgebildet ist, daß sie seitlich zugänglich ist, wodurch sie an einen Stab eingehakt werden kann. Da die bekannten Bauteile zur Verwendung in einem Kraftfahrzeug vorgesehen sind, ist die Ausnehmung so ausgebildet, daß sie an den Befestigungsstab einer Kraftfahrzeugsitz-Kopfstütze gehakt werden kann. An das andere Ende der Lasche ist ein hakenförmiges Element angespritzt. Das hakenförmige Element ist regelmäßig biegsam ausgebildet, wodurch Gegenstände in das hakenförmige Element klemmend eingebracht werden können. Das hakenförmige Element ist daher so ausgebildet, daß es lediglich zur Aufnahme von Gegenständen geringer Dicke geeignet ist.

Nachteilig bei diesem Bauteil ist, daß die Lasche zwar biegsam ausgebildet ist, jedoch im unbelasteten Zustand gerade verläuft, so daß sie etwa senkrecht zum Befestigungsstab der Kopfstütze verläuft, wodurch das hakenförmige Element etwa waagrecht im Kraftfahrzeuginneren angeordnet ist. Hierdurch ergeben sich Schwierigkeiten beim Einbringen von Gegenständen in das hakenförmige Element. Des weiteren wird das Ende der Lasche, an dem sich das hakenförmige Element befindet beim Einhängen von schweren Gegenständen zwar nach unten gezogen, wodurch das hakenförmige Element dann senkrecht angeordnet ist, jedoch bleibt das hakenförmige Element bei leichten Gegenständen in seiner waagerechten Lage, wodurch die Gegenstände aus dem hakenförmigen Element herausgleiten können. Bei mittelschweren Gegenständen bewegt sich das hakenförmige Element unstabil zwischen einer waagrechten und senkrechten Lage hin und her, das heißt, es federt.

Abhilfe hiervon schaffen Bauteile, bei denen die Lasche als flexibler Gurt ausgebildet ist. Zwar ist bei einem derartigen Bauteil das hakenförmige Element senkrecht angeordnet, jedoch bringt die flexible Ausgestaltung der Lasche Nachteile hinsichtlich der Stabilität mit sich.

Darüber hinaus läßt sich bei allen bekannten Bauteilen das hakenförmige Element konstruktionsbedingt nur bis zu einer gewissen Größe ausbilden, so daß nur relativ kleine Gegenstände in die hakenförmigen Elemente eingebracht werden können. Die kleinen hakenförmigen Elemente bringen darüber hinaus Probleme beim Einbringen der Gegenstände mit sich, da durch die Kleinheit der Haken diese nur sehr schwer zugänglich sind.

Aus der gattungsgemäßen WO-A-90/09130 ist ein Kleiderbügel bekannt, welcher eine Lasche hat, welche an ihren Enden jeweils ein hakenförmiges Element aufweist, welches über ein Gelenk mit der Lasche verbunden ist. Die hakenförmigen Elemente haben einen etwa kreisförmigen Querschnitt und erstrecken sich durch an den Enden der Lasche angeordnete Öffnungen.

Es ist Aufgabe der Erfindung ein eingangs genanntes Ordnungssystem derart auszubilden, daß es sehr gut handhabbar ist und auch zur Aufnahme von großen und schweren Gegenständen geeignet ist.

Die Lösung dieser Aufgabe ergibt sich aus den Merkmalen des kennzeichnenden Teils des Anspruchs 1. Vorteilhafte Weiterbildungen der Erfindung ergeben sich aus den abhängigen Ansprüchen.

Gemäß der Erfindung ist das hakenförmige Element über ein Gelenk mit der Lasche verbunden. Hierdurch wird auf einfache Weise erreicht, daß das hakenförmige Element aufgrund der Erdanziehungskraft stets senkrecht angeordnet ist. Die Lasche kann etwa waagrecht verlaufen, wodurch sie beispielsweise leicht an den Befestigungsstab einer Kopfstütze gehängt werden kann, ohne daß dies die Lage des hakenförmigen Elements beeinträchtigt. Durch die Anlenkung der hakenförmigen Elemente an die Lasche können sie sich an jede Unterfläche und Rückwand angleichen.

Dadurch, daß das hakenförmige Element über ein Gelenk mit der Lasche verbunden ist, läßt sich das hakenförmige Element auch groß und stabil ausbilden. So läßt sich das hakenförmige Element so ausbilden, daß seine Auslage etwa drei Zentimeter beträgt. Hierdurch lassen sich nicht nur große Gegenstände wie beispielsweise Attaché-Koffer, Aktenmappen oder Artikel mit breitem Tragegriff in das hakenförmige Element einbringen, sondern das hakenförmige Element ist außerdem auch sehr leicht zugänglich. Dies ist insbesondere in einem Kraftfahrzeug von sehr großem Vorteil, da während der Fahrt nicht immer die Ruhe zur Verfügung steht, um große Sorgfalt bei der Einbringung des Gegenstands in das hakenförmige Element walten lassen zu können. Es ist praktisch möglich, ein Gegenstand in das hakenförmige Element einzubringen, ohne daß man den Blick auf das hakenförmige Element richtet.

Als besonders vorteilhaft hat sich eine Ausführungsform herausgestellt, bei der die Lasche an ihrem anderen Ende eine Öffnung aufweist, durch welche sich ein Zapfen erstreckt, auf welchem das hakenförmige Element angeordnet ist. Hierbei ist es von großem Vorteil, wenn das hakenförmige Element schwenkbar auf dem Zapfen angeordnet ist.

Eine derartige Ausführungsform bringt nicht nur sehr große Vorteile im Hinblick auf eine einfache Herstellung mit sich sondern ist darüber hinaus auch noch robust und zuverlässig in der Anwendung. Der Zapfen kann so ausgebildet sein, daß er aus zwei ineinandersteckbare und miteinander verrastbare zylinderförmigen Elemente besteht, die jeweils an ihren voneinander abgewandten Enden eine kappenförmige Vergrößerung aufweisen, wodurch das hakenförmige Element auf dem Zapfen gehalten wird. Die beiden zylinderförmigen Elemente werden bei der Montage durch eine zylinderförmige Öffnung des hakenförmigen Elementes und der Öffnung der Lasche gesteckt, wodurch sie miteinander verrasten und das hakenförmige Element mit der Lasche schwenkbar verbunden ist.

Besonders vorteilhaft ist es, wenn beidseits der Lasche wenigstens ein hakenförmiges Element angeordnet ist. Hierdurch ergibt sich ein sehr vielseitig verwendbares Bauteil. Zum einen stehen dem Anwender zwei Haken zur Verfügung, in welche er unterschiedliche Gegenstände einhaken kann oder welche er als Doppelhaken für einen größeren Gegenstand verwenden kann. Hierbei ist es besonders günstig, daß die Haken symmetrisch zur Lasche angeordnet sind.

Des weiteren läßt sich ein derartiges Bauteil mit den hakenförmigen Elementen beispielsweise auch in einen in jedem Kraftfahrzeug vorhandenen Handgriff einhängen, wodurch an dieser Stelle die am anderen Ende der Lasche angeordnete Ausnehmung zur Verwendung zur Verfügung steht. Hierbei ist es besonders vorteilhaft, wenn die Ausnehmung seitlich zugänglich ist. Denn dadurch wird wiederum ein hakenförmiges Element geschaffen, welches sehr leicht zugänglich ist.

Darüber hinaus könnte ein derartiges Bauteil auch zur Arretierung des Kofferraumdeckels verwendet werden, wenn dieser aufgrund von sich im Kofferraum befindlichen sperrigen Gegenständen nicht ganz geschlossen werden kann. Das Bauteil kann einerseits in die Stoßstange eingehakt werden und andererseits in eine Öffnung oder Kante im Kofferraumdeckel.

Besonders vorteilhaft ist es, wenn die Länge des Zapfens gleich oder größer ist als der Abstand von zwei Befestigungsstäben von Kraftfahrzeugsitz-Kopfstützen und auf dem Zapfen zwei Laschen angeordnet sind. Die beiden Laschen können dann in die Befestigungsstäbe eingehakt werden und auf den relativ großen Zapfen eine Vielzahl von hakenförmigen Elementen angeordnet werden. So können beispielsweise drei, vier oder noch mehr hakenförmige Elemente auf dem Zapfen angeordnet sein. Der Zapfen ist dann zweckmäßigerweise als Rohr ausgebildet, welches an seinen Stirnseiten mit im Durchmesser vergrößerten Abschlußkappen versehen ist, so daß die hakenförmigen Elemente beziehungsweise die Laschen nicht vom Rohr heruntergleiten können.

Eine derartige Ausführungsform hat darüber hinaus noch den Vorteil, daß, wenn sich nur sehr wenige hakenförmige Elemente oder gar keine hakenförmigen Elemente auf dem Rohr befinden, das Rohr als zusätzlicher Handgriff einem Kraftfahrzeuginsassen zur Verfügung steht. Die Laschen werden hierzu in die Befestigungsstäbe der Kopfstütze so eingehakt, daß die Laschen zum hinteren Sitz weisen, wodurch das Rohr für eine auf dem Rücksitz sitzende Person sehr leicht zugänglich ist. Dies ist insbesondere bei langen Fahrten sehr angenehm, da hierdurch die auf dem Rücksitz sitzende Person ihre Hände zum ausruhen auf das Rohr aufstützen kann.

Das Rohr kann auch so lang sein, daß es nahezu über die gesamte Breite des Kraftfahrzeuges reicht. Das Rohr wird dann mit den Laschen an beiden Kopfstützen der Vordersitze befestigt. Hierdurch besteht die Möglichkeit eine große Anzahl von hakenförmigen Elementen auf dem Rohr anzuordnen, wodurch eine Vielzahl von Gegenständen in geordneter Weise und sicher im Kraftfahrzeug aufbewahrt werden können.

Wenngleich auch bisher beschrieben wurde, daß die Laschen an den Kopfstützen der Vordersitze befestigt werden und sich in Richtung der Rücksitze erstrecken, so versteht es sich, daß sich die Laschen auch in Fahrrichtung erstrecken können, wodurch dem Fahrer auf dem Beifahrersitz hakenförmige Elemente zur Verfügung stehen. Des weiteren können die Laschen selbstverständlich auch an den Kopfstützen der Rücksitze befestigt werden, wodurch auf den Rücksitzen ebenfalls zusätzliche Haken zur Aufbewahrung von Gegenständen zur Verfügung stehen.

Weitere Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: ein erfindungsgemäßes Bauteil in perspektivischer Darstellung,
- Fig. 2: das in Figur 1 dargestellte Bauteil in Vorderansicht,
- Fig. 3: das in Figur 1 dargestellte Bauteil in Seitenansicht,
- Fig. 4: eine Explosionsdarstellung des in Figur 1 dargestellten Bauteils,
- Fig. 5: eine erste Anwendungsmöglichkeit eines erfindungsgemäßen Bauteils
- Fig. 6: eine zweite Anwendungsmöglichkeit eines erfindungsgemäßen Bauteils,
- Fig. 7: eine dritte Anwendungsmöglichkeit eines erfindungsgemäßen Bauteils,
- Fig. 8: eine vierte Anwendungsmöglichkeit eines erfindungsgemäßen Bauteils,
- Fig. 9: eine fünfte Anwendungsmöglichkeit eines erfindungsgemäßen Bauteils und
- Fig. 10: eine sechste Anwendungsmöglichkeit eines erfindungsgemäßen Bauteils.

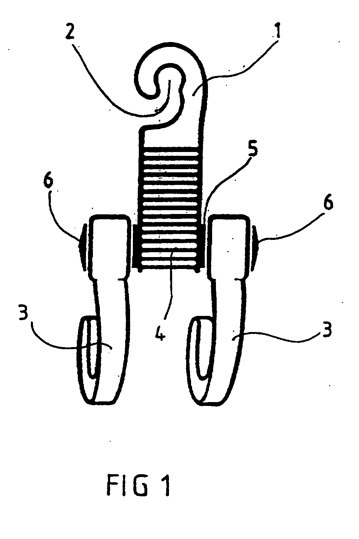

Wie der Figur 1 entnommen werden kann, weist eine Lasche 1 an ihrem einen Ende eine Ausnehmung 2 auf, welche seitlich zugänglich ist. Die Ausnehmung 2 ist so ausgebildet, daß sie einen Engpaß aufweist, wodurch ein Schnappeffekt entsteht. Das heißt, ein in die Ausnehmung 2 eingebrachter Stab rastet ein.

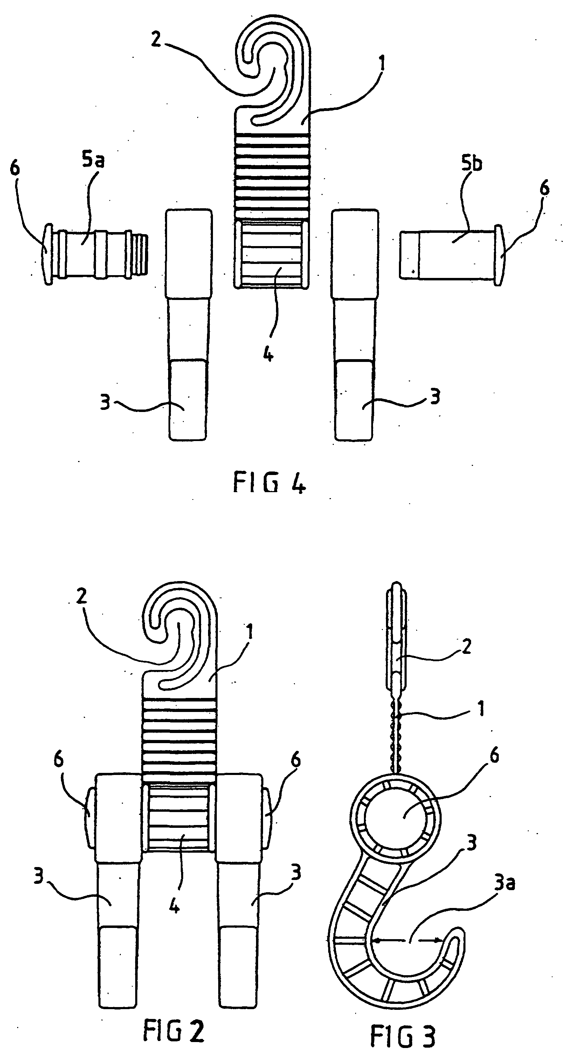

An ihrem anderen Ende ist die Lasche 1 buchsenförmig ausgebildet. Die Achse der Buchse liegt in der Ebene der Lasche 1. Durch die Buchse 4 erstreckt sich ein Zapfen 5, welcher aus zwei separaten Teilen 5a und 5b (siehe Figur 4) besteht. Auf dem Zapfen 5 sind zwei hakenförmige Elemente 3 angeordnet. Die hakenförmigen Elemente 3 sind beidseits der Lasche 1 angeordnet.

Die Lasche 1 und die Buchse 4 sind einstückig ausgebildet und bestehen aus Kunststoff. Die beiden Teile 5a, 5b des Zapfens 5 sind so ausgebildet, daß sie ineinandersteckbar und miteinander verrastbar sind. Sie weisen an ihren voneinander abgewandten Enden im Durchmesser vergrößerte Kappen 6 auf. Durch die Kappen 6 werden die hakenförmigen Elemente 3 und die Lasche 4 auf dem Zapfen 5 gehalten.

Die hakenförmigen Elemente 3 sind aus Kunststoff und weisen seitlich Verstärkungsrippen 3b auf. Die Auslage 3a der hakenförmigen Elemente beträgt etwa 3 Zentimeter. An ihrem der Auslage 3a gegenüberliegenden Ende weisen die hakenförmigen Elemente 3 eine zylinderförmige Öffnung auf, durch welche sich der Zapfen 5 erstreckt.

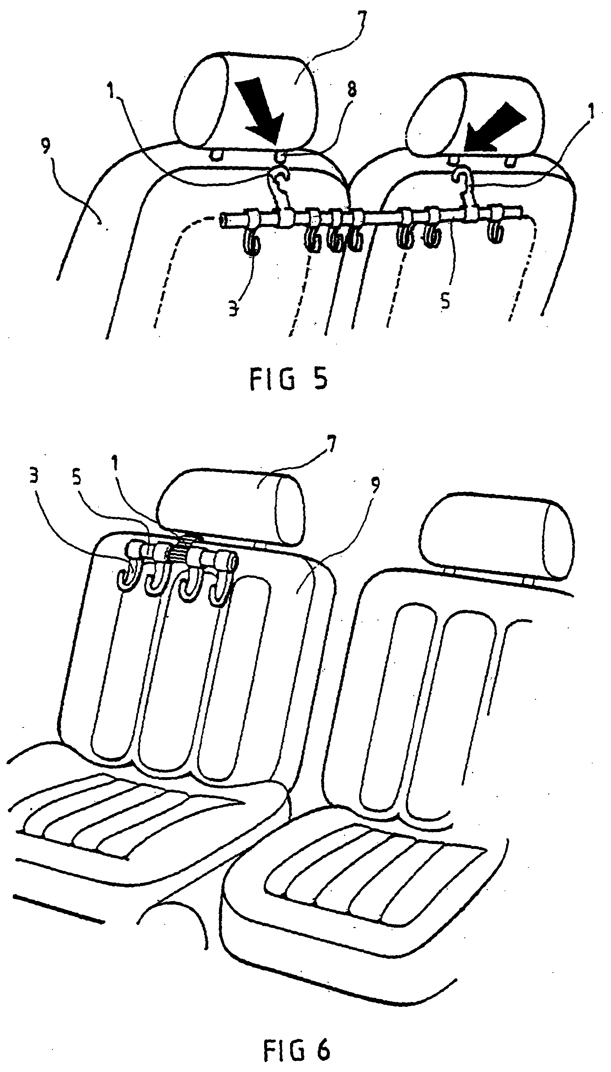

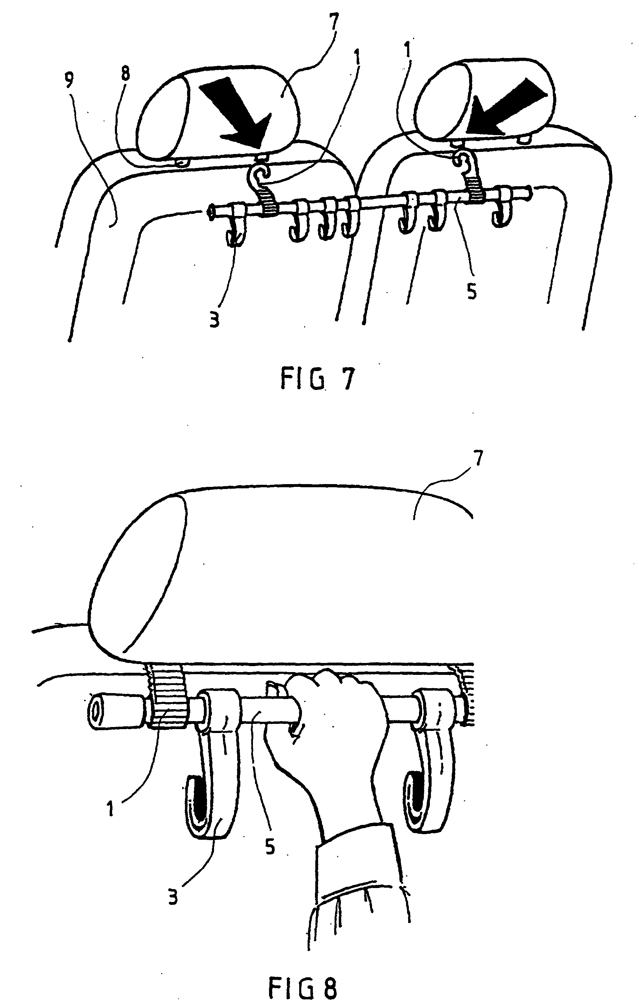

Wie insbesondere den Figuren 5 und 7 entnommen werden kann, kann der Zapfen 5 als Rohr ausgebildet werden, welches sich etwa über die Breite von 2 nebeneinander angeordneten Rückenlehnen 9 von Kraftfahrzeugsitzen erstreckt. Mittels der Laschen 1 kann das Bauteil an Befestigungsstäben 8 von Kopfstützen 7 befestigt werden. Bei der in den Figuren 5 und 7 dargestellten Ausführungsformen sind zwischen den beiden Laschen 1 fünf hakenförmige Elemente 3 angeordnet. Des weiteren ist jeweils ein hakenförmiges Element 3 außerhalb der Laschen 1 angeordnet. Die in Figur 7 dargestellte Anordnung hat den großen Vorteil, daß die Öffnungen der Haken in Richtung Rückenlehne zeigen. Hierdurch wird in vorteilhafter Weise vermieden, daß die Spitzen der Haken 3 einem auf dem Rücksitz sitzenden Fahrgast zugewandt sind. Dies senkt eine mögliche Verletzungsgefahr beispielsweise bei einem Unfall erheblich.

Bei der in Figur 6 dargestellten Ausführungsform sind auf dem Rohr 5 vier hakenförmige Elemente 3 sowie eine Lasche 1 angeordnet. Die Lasche 1 ist so an einem Befestigungsstab der Kopfstütze 7 befestigt, daß die hakenförmigen Elemente 3 auf der Vorderseite des Sitzes 9 angeordnet sind.

Bei der in Figur 8 dargestellten Ausführungsform sind auf dem Rohr 5 lediglich zwei hakenförmige Elemente 3 angebracht. Hierdurch steht der größte Teil des Rohrs fünf als Handgriff zur Verfügung. Dies ist besonders vorteilhaft, da es von vielen Fahrgästen als angenehm empfunden wird, sich mit der Hand an einem vor dem Körper liegenden Handgriff festzuhalten. Somit kann durch das erfindungsgemäße Bauelement auf einfache Weise ein Handgriff an einer Stelle zur Verfügung gestellt werden, wo die meisten Kraftfahrzeuge keinen Handgriff haben.

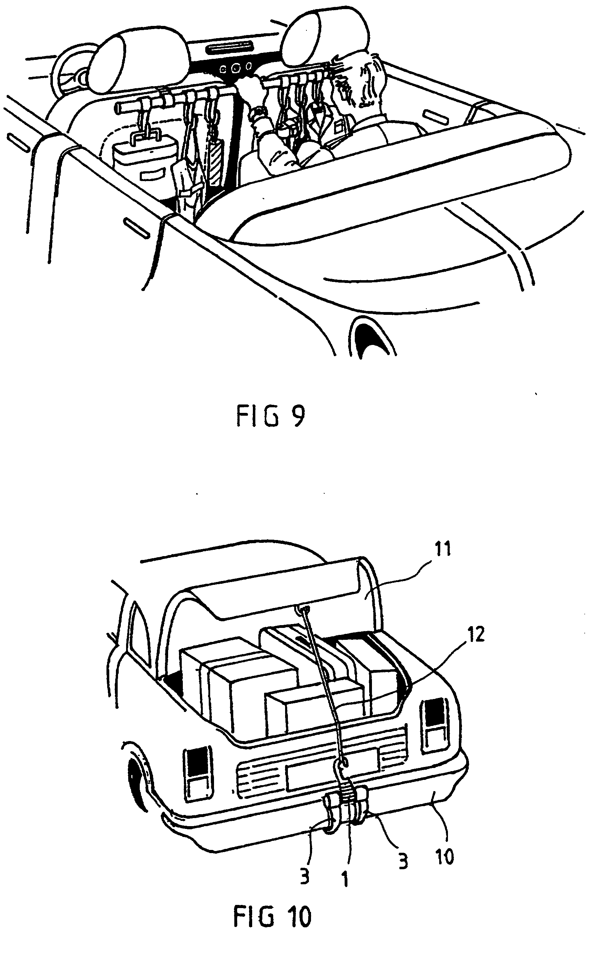

Ähnliches gilt auch für die in Figur 9 dargestellte Ausführungsform der Erfindung. Hier sind auf einem Rohr, welches sich etwa über die Breite der beiden Vordersitze erstreckt, zwischen den beiden Laschen 1 lediglich fünf hakenförmige Elemente 3 angeordnet. Hierdurch steht einer auf dem Rücksitz sitzenden Person ein größerer Bereich zur Verfügung, an dem er sich festhalten kann. Dies ist nicht nur während der Fahr von Vorteil, sondern auch beim Ein- und Aussteigen sehr hilfreich.

Bei der in Figur 10 dargestellten Anwendungsmöglichkeit des erfindungsgemäßen Bauteils sind zwei symmetrisch zur Lasche 1 angeordnete hakenförmige Elemente 3 in die Stoßstange 10 des Kraftfahrzeuges eingehakt. Dadurch ist es auf einfache Weise möglich, den Kofferraumdeckel 11 mittels beispielsweise eines Gummis 12 zu arretieren. Das Gummi 12 braucht lediglich in die Ausnehmung 2 der Lasche 1 eingehängt zu werden und dann mit dem Kofferraumdeckel 11 verbunden zu werden. Da sich dies sehr einfach und schnell bewerkstelligen läßt, lassen sich im Kofferraum eines Kraftfahrzeuges problemlos größere Gegenstände transportieren.

## Patentansprüche

1. Ordnungssystem zur Aufnahme von Gegenständen, insbesondere zur Verwendung in einem Kraftfahrzeug, mit wenigstens einer Lasche (1), welchen an ihrem einen Ende eine Ausnehmung (2) aufweist und an ihrem anderen Ende wenigstens ein hakenförmiges Element (3) aufweist, wobei das hakenförmige Element (3) über ein Gelenk (4, 5) mit der Lasche (1) verbunden ist, und die Lasche (2) an ihrem anderen Ende eine Öffnung (4) aufweist, durch welche sich ein Zapfen (5) erstreckt, auf welchem das hakenförmige Element (3) angeordnet ist.
**dadurch gekennzeichnet,**
**daß** das hakenförmige Element (3) schwenkbar auf dem Zapfen (5) angeordnet ist und daß beidseits der Lasche (1) wenigstens ein hakenförmiges Element (3) angeordnet ist.

2. Ordnungssystem nach Anspruch 1,
**dadurch gekennzeichnet,**
**daß** zwei Laschen (1) vorgesehen sind und die Länge des Zapfens (5) gleich oder größer ist als der Abstand von zwei Befestigungsstäben von Kraftfahrzeugsitz-Kopfstützen.

3. Ordnungssystem nach Anspruch 1 oder 2,
**dadurch gekennzeichnet,**
**daß** die Ausnehmung (2) seitlich zugänglich ist.

4. Ordnungssystem nach einem der Ansprüche 1 bis 3,
**dadurch gekennzeichnet,**
**daß** die Auslage (3a) der hakenförmigen Elemente (3) etwa 3 cm beträgt.

5. Ordnungssystem nach einem der Ansprüche 2 bis 4,
derart modifiziert,
daß kein hakenförmiges Element (3) auf dem Zapfen (5) angeordnet ist.

## Claims

1. Arrangement system for receiving articles, particularly for use in a motor vehicle, with at least one strap (1) having a recess (2) in its one end and at its other end at least one hook-shaped element (3), whereby the hook-shaped element (3) is linked to the strap (1) by means of a joint (4, 5) and the strap (2) has an opening (4) at its other end through which a pin (5) extends on which the hook-shaped element (3) is arranged, **characterised in that** the hook-shaped element (3) is rotatably arranged on the pin (5) and that arranged on either side of the strap (1) is at least one hook-shaped element (3).

2. Arrangement system according to Claim 1, **characterised in that** two straps (1) are provided and the length of the pin (5) is equal to or greater than the separation between two fixing rods of motor vehicle seat headrests.

3. Arrangement system according to Claim 1 or 2, **characterised in that** the recess (2) is laterally accessible.

4. Arrangement system according to one of the claims 1 to 3, **characterised in that** the opening (3a) of the hook-like elements (3) is approximately 3 cm.

5. Arrangement system according to one of the claims 2 to 4, modified in that no hook-shaped element (3) is arranged on the pin (5).

## Revendications

1. Système pour ranger des objets, notamment destiné à être utilisé dans un véhicule automobile, comprenant au moins une attache (1) présentant à l'une de ses extrémités un évidement (2) et à son autre extrémité au moins un élément en forme de crochet (3), sachant que l'élément en forme de crochet (3) est relié à l'attache (1) par le biais d'une articulation (4, 5) et que l'attache (1) comporte à son extrémité une ouverture (4) que traverse un axe (5) sur lequel est monté l'élément en forme de crochet (3), **caractérisé en ce que** l'élément en forme de crochet (3) pivote sur l'axe (5), et **en ce que** de part et d'autre de l'attache (1) se trouve au moins un élément en forme de crochet (3).

2. Système pour ranger des objets selon la revendication 1, **caractérisé en ce que** deux attaches (1) sont prévues et **en ce que** la longueur de l'axe (5) est égale ou supérieure à l'écartement de deux tiges de fixation d'appui-tête de siège de véhicule automobile.

3. Système pour ranger des objets selon la revendication 1 ou 2, **caractérisé en ce que** l'évidement (2) est accessible par le côté.

4. Système pour ranger des objets selon l'une des revendications 1 à 3, **caractérisé en ce que** l'ouverture (3a) des éléments en forme de crochet (3) est d'environ 3 cm.

5. Système pour ranger des objets selon l'une des revendications 2 à 4, modifié de telle sorte qu'aucun élément en forme de crochet (3) ne soit placé sur l'axe (5).
